# EUROPEAN PATENT APPLICATION

(11) **EP 4 810 329 A1**
(43) Date of publication of application: **23.09.2026**
(21) Application number: 26166056.7
(22) Date of filing: 19.03.2026
(51) Int. Cl.: B60S 1/34, B60S 1/38, B60S 1/04

(54) **VEHICLE PROVIDED WITH A WINDSCREEN WIPER SYSTEM WITH TRANSLATION MOVEMENT**

(30) Priority: 21.03.2025 IT 202500005820
(71) Applicant: FERRARI S.p.A., 41100 Modena (IT)
(72) Inventor: STATINI, Mirko, 41100 MODENA (IT); GUANDALINI, Roberto, 41100 MODENA (IT)
(74) Representative: Studio Torta S.p.A.

(57) **Abstract**

A vehicle (1) having: a body (4) provided with a windscreen (6) and two front pillars (10), each laterally delimiting the windscreen (6); and a windscreen wiper system (12) provided with one single arm (13), with a blade (14), which is coupled to the arm (13) and is pushed by the arm (13) against an outer surface of the windscreen (6), and with an actuator device (15) configured to move the arm (13) on the windscreen (6) with an alternating movement entailing at least one section (T1; T), in which the arm (13) makes a pure translation linear movement. The actuator device (15) has: a guide (18), which is integral to the body (4) and defines the pure translation linear movement of the arm (13); a slide (19), which is mounted so as to slide on the guide (18) and supports the arm (13); and a first electric motor (23), which moves the slide (19) along the guide (18). The guide (18) is directly and exclusively fixed to a lower edge of the windscreen (6).

## Description

### CROSS-REFERENCE TO RELATED APPLICATIONS

This patent application claims priority from Italian patent application no. 102025000005820 filed on March 21, 2025, the entire disclosure of which is incorporated herein by reference.

### TECHNICAL FIELD

The present invention relates to a vehicle provided with a windscreen wiper system with translation movement.

### STATE OF THE ART

Patent Application US2019270431A1 describes a vehicle provided with a windscreen wiper system which is actuated by a linear actuator provided with a guide having permanent magnets and with a movable electromagnetic block sliding along the guide. The linear actuator moves an arm supporting a blade from right to left and vice versa to clean the whole windscreen surface. Further provided is a rotary actuator which is used to rotate the arm between an operating position, in which the arm is longitudinally oriented and is located on the windscreen, and a rest position, in which the arm is transversely oriented and is arranged in a housing obtained under the front hood.

Patent application GB225463A describes a windscreen wiper supported by a sleeve sliding on a pin mounted parallel to the windscreen and provided with an endless helical groove so that, when the pin rotates continuously, the windscreen wiper moves alternatively on the windscreen. The pin is enclosed in a tube and rotates on ball bearings supported by brackets fixed to the frame of the windscreen or to the windscreen.

Patent Application US2020398792A1 describes a windscreen wiper mounted on a movable support element, a guiding device to guide the support element along a predefined trajectory, and a motor mounted on the support element and suited to provide the driving power necessary to move the support element along the predefined trajectory; in particular, the windscreen wiper moves with a translation movement between a first and a second position, and with a rotation movement around a rotation axis perpendicular to the windscreen between the second position and a third position.

### DESCRIPTION OF THE INVENTION

The object of the present invention is to provide a vehicle provided with a windscreen wiper system with translation movement having particularly small dimensions and weight.

According to the present invention, a vehicle provided with a windscreen wiper system with translation movement is provided, according to what is claimed by the appended claims.

The claims describe preferred embodiments of the present invention, forming an integral part of the present description.

### BRIEF DESCRIPTION OF THE DRAWINGS

The present invention will now be described with reference to the accompanying drawings, which illustrate some non-limiting example embodiments thereof, wherein:
- Figure 1 is a perspective view, with parts removed for clarity, of a car provided with a windscreen wiper system with translation movement;
- Figure 2 is a view of a windscreen and of the windscreen wiper system of the car of Figure 1;
- Figures 3 and 4 are two different perspective views of the windscreen wiper system;
- Figure 5 is a perspective and partially exploded view of part of the windscreen wiper system;
- Figure 6 is a schematic and sectional view of part of the windscreen wiper system arranged next to a front pillar;
- Figure 7 is a schematic and sectional view of part of the windscreen wiper system arranged next to a lower edge of the windscreen;
- Figure 8 is a schematic view of the windscreen illustrating the operation of the windscreen wiper system; and
- Figure 9 is a schematic view of the windscreen illustrating the operation of an alternative embodiment of the windscreen wiper system.

### PREFERRED EMBODIMENTS OF THE INVENTION

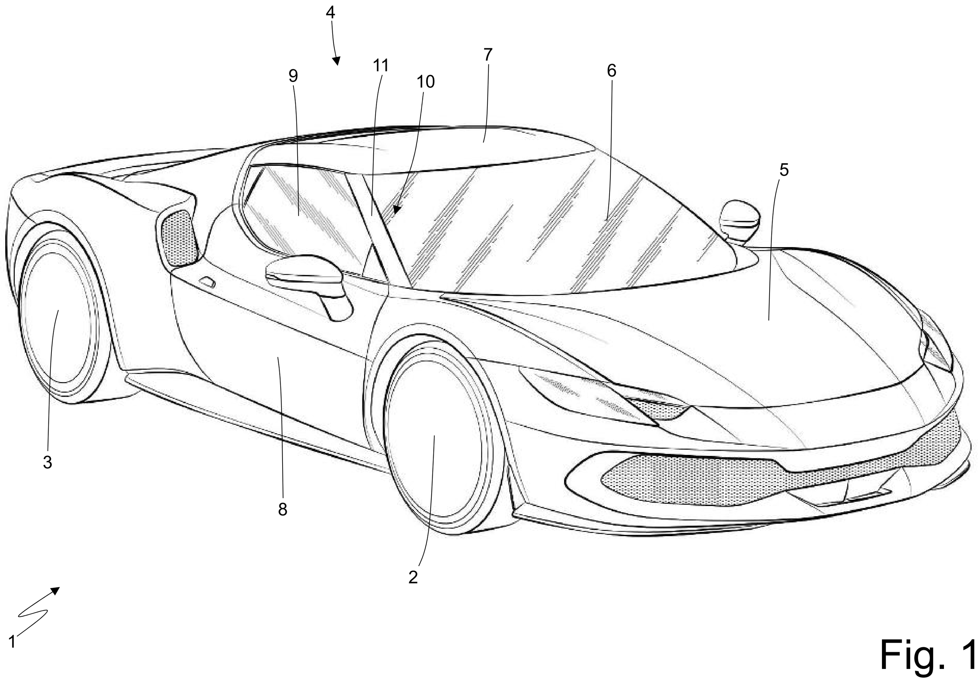

In Figure 1, reference numeral 1 indicates, as a whole, a vehicle (in particular, a car) comprising a chassis which supports a pair of driven (i.e. not driving) front wheels 2 and a pair of driving rear wheels 3. In a central position, an internal combustion engine is arranged, which produces a torque which is transmitted to the driving rear wheels 3 by means of a transmission.

The chassis is covered by a body 4 which covers a passenger compartment which is arranged between the front wheels 2 and the rear wheels 3 and is provided with (at least) two seats, each adapted to accommodate a corresponding occupant; namely there is always room in the passenger compartment for a driver to whom (at least) one passenger can be added (whose presence is obviously optional).

The body 4 comprises, among other things, a front bumper, a front hood 5 (which covers a front luggage compartment), a windscreen 6 which anteriorly delimits the passenger compartment, a roof 7 which superiorly covers the passenger compartment, a rear window which posteriorly delimits the passenger compartment, a rear hood (which covers a rear engine compartment), and a rear bumper. Laterally, the body 4 has two sides that are provided with respective doors 8, each equipped with a respective openable window 9.

The body 4 further comprises two front pillars 10, each laterally delimiting the windscreen 6, originating from the belt line (i.e. from the upper perimeter limit of the closed area from which the glass surfaces depart in height), and ending in the roof 7. The front pillars 10 have the function of laterally supporting (containing) the windscreen 6 and of anteriorly supporting the roof 7, whereas the rear pillars have the function of laterally supporting (containing) the rear window and of posteriorly supporting the roof 7. Namely the roof 7 has four supporting points: two supporting points defined by the front pillars 10 and two supporting points defined by the rear pillars. The two front pillars 10 can support the roof 7 directly (i.e. they can be connected directly to the roof 7) or they can support the roof 7 indirectly (i.e. they can end in a horizontal cross-member on which the roof 7 rests).

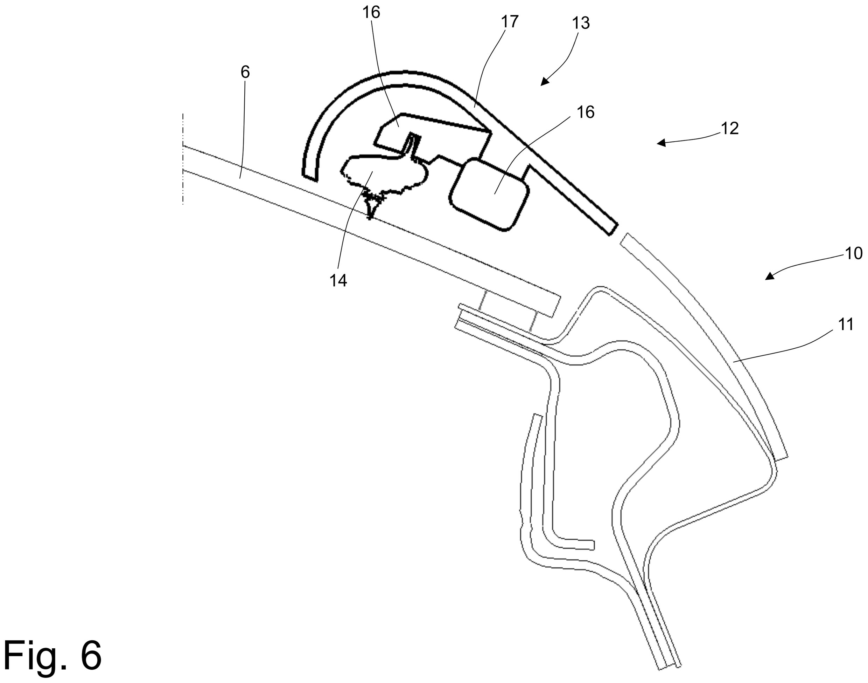

According to what is better illustrated in Figure 6, the car 1 comprises two covering elements 11 (having only aesthetic and aerodynamic functions) of the front pillars 10; i.e. each covering element 11 covers and hides from the outside the corresponding front pillar 10 so that the front pillar 10 is not visible from the outside. In other words, each covering element 11 externally covers a corresponding front pillar 10, comprises an outer coating visible from the outside of the car 1, and comprises a support structure which is glued to the outer coating and is firmly constrained to the corresponding front pillar 10.

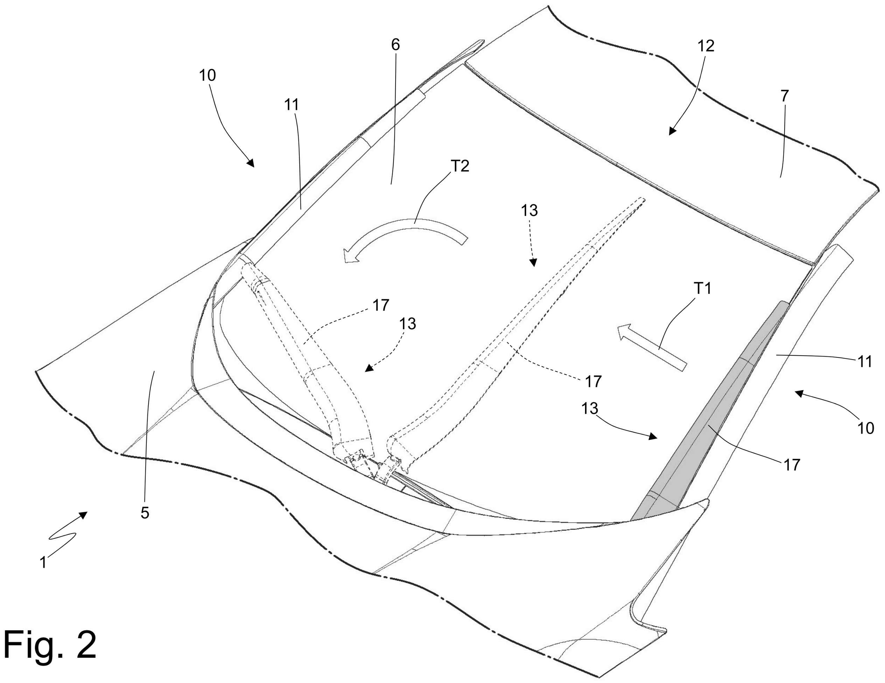

According to what is illustrated in Figure 2, the windscreen 6 is coupled to a windscreen wiper system 12 of the mechanical type configured to keep the windscreen 6 clean by removing water, snow, dust, or other debris which could hinder the driver's visibility while he/she is driving.

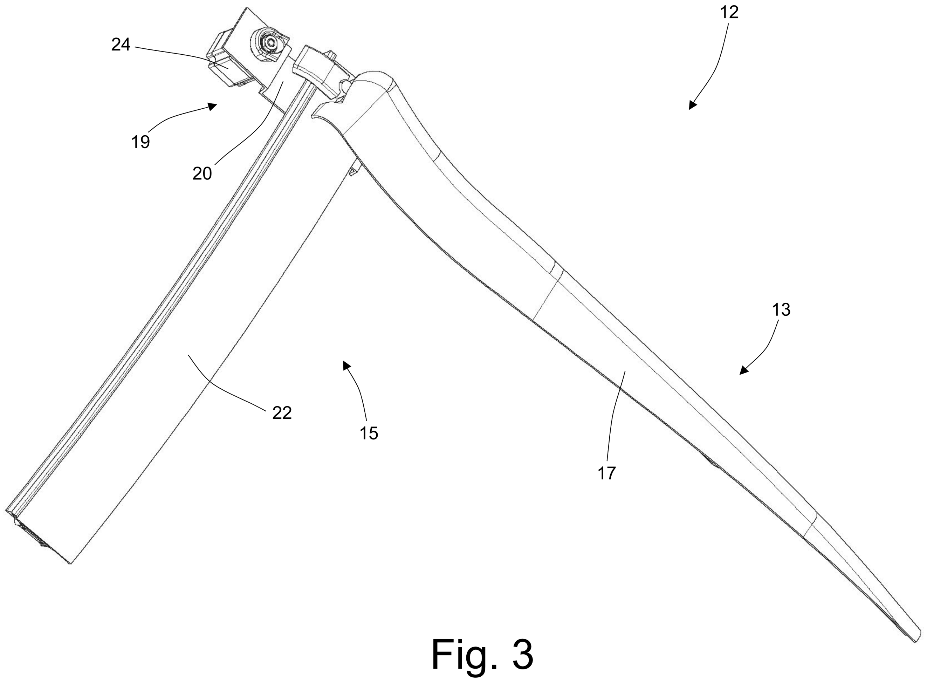

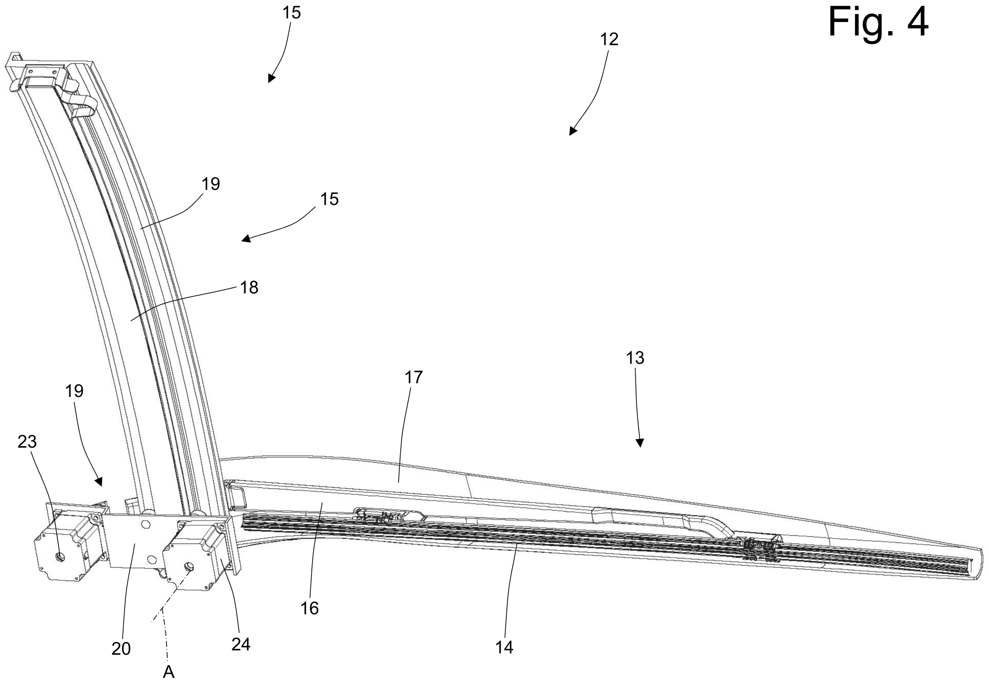

The windscreen wiper system 12 comprises a single rigid arm 13 supporting a blade 14 (illustrated in Figures 4, 6, and 7) which is elastically deformable and is pushed by the arm 13 against the outer surface of the windscreen 6. The windscreen wiper system 12 further comprises an actuator device 15 (illustrated in Figures 3-5, and 7) configured to alternatively move the arm 13 on the entire extension of the windscreen 6. In particular, in Figure 2 the arm 13 is illustrated in three different positions: a rest position (illustrated by a solid line on the right), in which the arm 13 remains stationary when the windscreen wiper system 12 is turned off, an intermediate position (illustrated by a dashed line in the middle), and a final position (illustrated by a dashed line on the left). When the windscreen wiper system 12 is operating, the arm 13, under the thrust of the actuator device 15, moves alternatively from right to left and vice versa between the rest position and the final position, dragging the blade 14 across the entire extension of the windscreen 6.

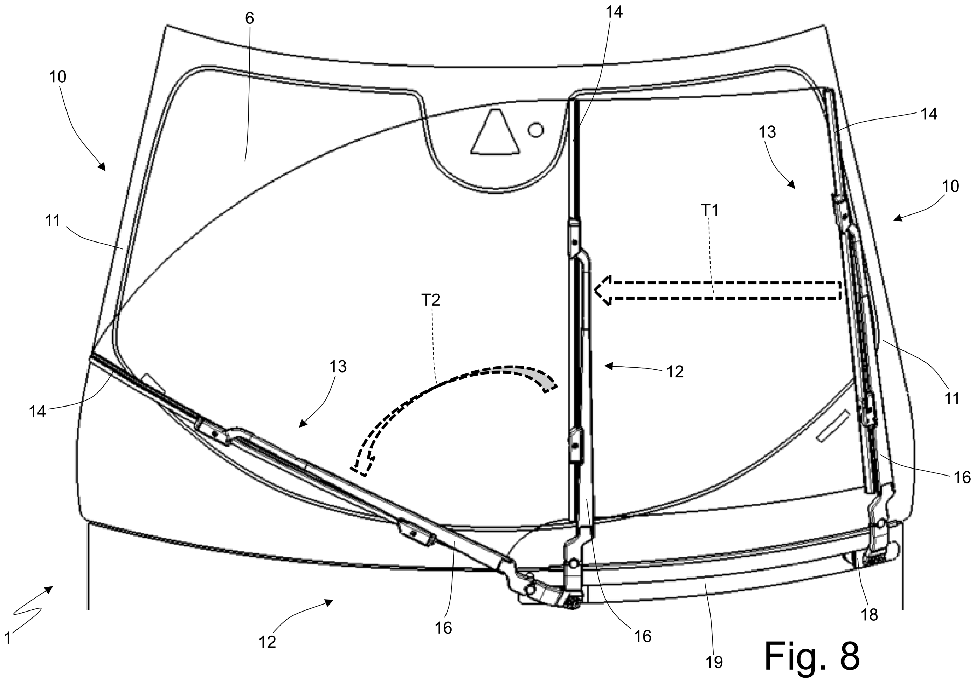

In the embodiment illustrated in Figures 2 and 8, the actuator device 15 is configured to move the arm 13 on the windscreen 6 with a movement that entails (starting from the rest position) an initial linear section T1 of pure translation (i.e. along which the arm 13 translates parallel to itself without performing any rotation) and a final circular section T2 of pure rotation (i.e. along which the arm 13 rotates around a rotation axis A perpendicular to the windscreen 6 and illustrated in Figures 4, 5 and 7, which remains stationary and, therefore, without the arm 13 performing any translation). In other words, starting from the rest position, the arm 13 translates parallel to itself without performing any rotation along the initial section T1 until it reaches the intermediate position; at this point, from the intermediate position the arm 13 rotates around the rotation axis A (which remains stationary) from the intermediate position along the final section T2 until it reaches the final position. Obviously, the path travelled by the arm 13 to move from the rest position to the final position is inverted (i.e. travelled in the opposite direction) to return from the final position to the rest position.

According to a preferred embodiment, the arm 13 is oriented longitudinally, i.e. parallel to a travel direction of the car 1, in the rest position and in the intermediate position, and it is oriented transversely, i.e. perpendicular to the travel direction of the car 1, in the final position.

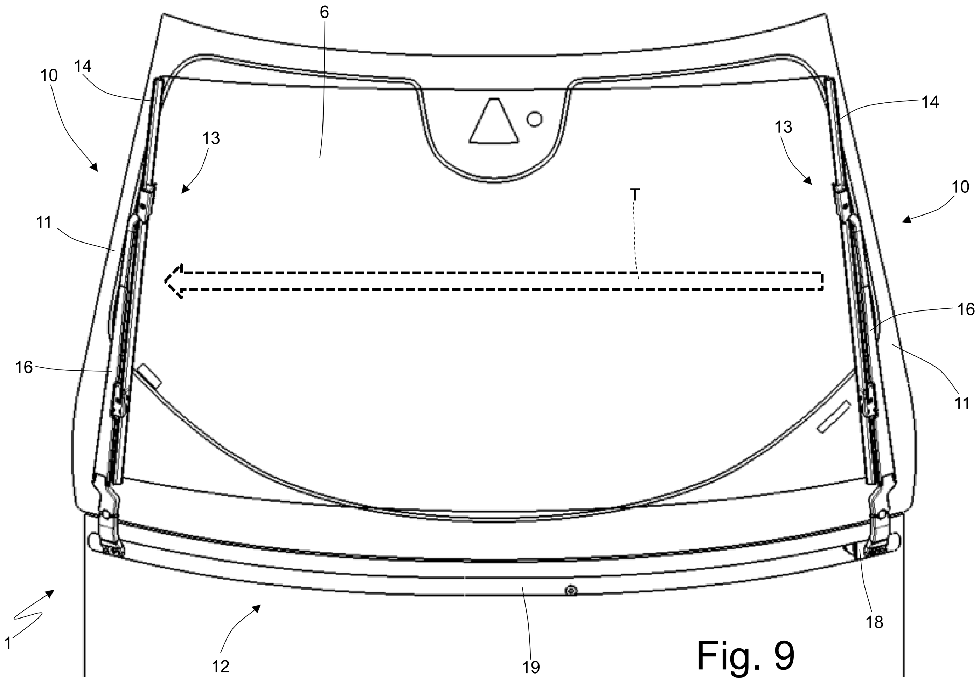

In the alternative embodiment illustrated in Figure 9, the actuator device 15 is configured to move the arm 13 on the windscreen 6 with a movement that entails (starting from the rest position) one single linear section T of pure translation (i.e. along which the arm 13 translates parallel to itself without performing any kind of rotation). In other words, in the embodiment illustrated in Figure 9, also in the final position the arm 13 is longitudinally oriented as in the rest position, since along the entire single linear section T of pure translation the arm 13 does not perform any rotation. Therefore, in the embodiment illustrated in Figure 9, the arm 13 translates parallel to itself without performing any kind of rotation along the single section T until it reaches the final position. Obviously, the path travelled by the arm 13 to move from the rest position to the final position is inverted (i.e. travelled in the opposite direction) to return from the final position to the rest position.

In summary, the actuator device 15 is configured to move the arm 13 on the windscreen 6 with an alternating movement entailing at least one section (the initial section T1 in the embodiment illustrated in Figures 2 and 8, and the single section T in the embodiment illustrated in Figure 9), in which the arm 13 makes a pure translation linear movement.

According to what is better illustrated in Figures 4 and 6, the arm 13 comprises a structural element 16 (sized to withstand the mechanical stresses to which the arm 13 is subjected in use), on which the blade 14 is directly fixed, and a covering element 17 (having only aesthetic and aerodynamic functions) which is arranged on top of the structural element 16 on the side opposite the blade 14 and completely covers the structural element 16 so that the structural element 16 is completely hidden under the covering element 17. In other words, the covering element 17 has a greater extension than the structural element 16 and, therefore, it completely covers the structural element 16.

According to what is illustrated in Figures 2 and 6, in the rest position the arm 13 is arranged close to a front pillar 10. In Figure 2, the rest position provides for the arm 13 to be arranged close to the left front pillar 10, however, alternatively, the rest position could provide for the arm 13 to be arranged close to the right front pillar 10. As mentioned in the foregoing, in the rest position, the arm 13 is oriented longitudinally; furthermore, in the rest position, the arm 13 is arranged parallel to the front pillar 10.

According to a preferred embodiment, in the rest position, the covering element 17 of the arm 13 rests against the front pillar 10 and is arranged in continuity with the front pillar 10. In particular, in the rest position, the covering element 17 of the arm 13 rests against the covering element 11 of the front pillar 10 and is arranged in continuity with the covering element 11 of the front pillar 10. Namely, in the rest position, there is no empty (free) space between the covering element 17 of the arm 13 and the covering element 11 of the front pillar 10, and the outer surface of the covering element 17 of the arm 13 is seamlessly joined to the outer surface of the covering element 11 of the front pillar 10.

According to what is better illustrated in Figure 6, the covering element 17 of the arm 13 has an "L"-like shape having a first end, which faces the outer surface of the windscreen 6, and a second end, which is opposite the first end and, in the rest position, rests against the front pillar 10. According to what is better illustrated in Figure 6, the covering element 17 is fixed to the structural element 16 in the area of an intermediate portion thereof arranged between the first end and the second end.

According to what is illustrated in Figures 3, 4, and 5, the actuator device 15 comprises a guide 18, which is integral to the body 4 and defines the pure translation linear movement of the arm 13, and a slide 19 which is mounted so as to slide on the guide 18 and supports the arm 13. The slide 19 is provided with a rigid frame 20 which is made of a shaped metal plate and supports four small wheels 21 which roll from opposite sides along the guide 18 to allow the slide 19 only one degree of freedom of movement relative to the guide 18 (i.e. they allow the slide 19 only to translate along the guide 18). Obviously, the coupling between the slide 19 and the guide 18 could be achieved in a different manner, such as using a magnetic coupling (therefore, without contact, completely eliminating friction) or using low-friction balls or bushings.

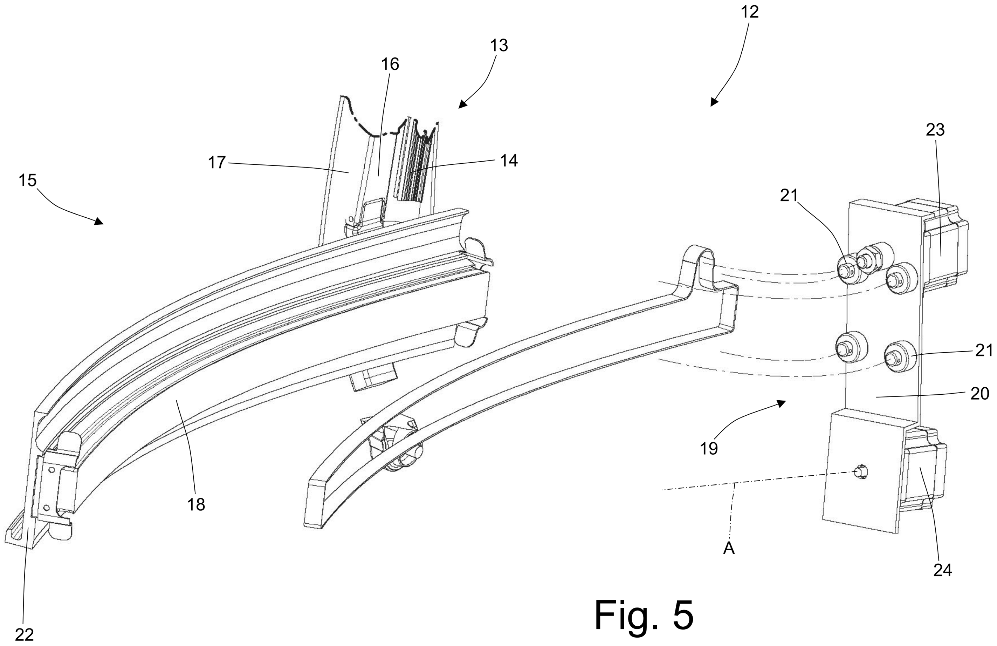

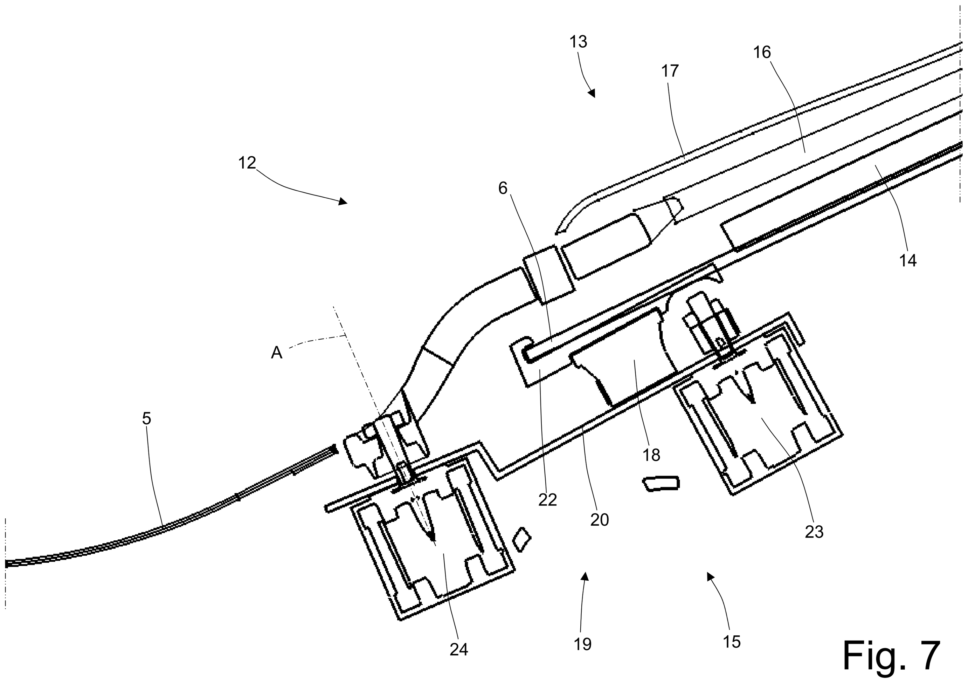

According to a preferred embodiment illustrated in Figures 5 and 7, a coupling body 22 is fixed to the guide 18 and, on one side, is integral to the guide 18 (i.e. it is rigidly and firmly connected to the guide 18) whereas, on the opposite side, it is shaped so as to enclose a lower end of the windscreen 6, so as to be rigidly and firmly connected to the windscreen 6. In other words, the coupling body 22 has a "U"-like shape shaped to define a seat that accommodates therein (and, therefore, encloses) a lower end of the windscreen 6. In other words, the guide 18 is directly and exclusively fixed to a lower edge of the windscreen 6 (through the coupling body 22) and, in particular, the guide 18 encloses the lower edge of the windscreen 6 (considering the coupling body 22 as an extension of the guide 18 and, therefore, as an integral part of the guide 18). Namely, the guide 18 is only supported by the windscreen 6 and has no points of contact with the other elements of the body 4; in other words, the guide 18 is hung only to the lower edge of the windscreen 6.

According to what is illustrated in Figures 3, 4, and 5, the actuator device 15 comprises an electric motor 23 which moves the slide 19 along the guide 18, i.e. imparts to the slide 19 a thrust to translate along the guide 18.

In the embodiment illustrated in the accompanying Figures, the electric motor 23 is mounted on the slide 19 and, therefore, is integral to the slide 19, translating together with the slide 19 along the guide 18; in this embodiment, the electric motor 23 is connected to a transmission which directly applies a thrust on the guide 18 (such as by means of a rack-and-pinion mechanism). According to a different embodiment not illustrated, the electric motor 23 is integral to the body 4 and, therefore, it remains stationary together with the guide 18; in this embodiment, the electric motor 23 is connected to a transmission that pushes or pulls the slide 19 (such as by means of a belt, a worm gear, or a chain). According to a further embodiment, the electric motor 23 is a linear motor comprising a linear stator which is arranged in a fixed position along the guide 18, and a movable slider which is rigidly connected to the slide 19 and is electro-magnetically coupled to the stator (such as due to a permanent magnet carried by the slider) in order to receive a driving force from the stator.

According to what is illustrated in Figures 3, 4, and 5, the actuator device 15 comprises an electric motor 24 which is separate from and independent of the electric motor 23 and is configured to rotate the arm 13 relative to the slide 19 around a rotation axis A which is perpendicular to the windscreen 6. In the embodiment illustrated in the accompanying Figures, the electric motor 24 is mounted on the slide 19 and, therefore, is integral to the slide 19, translating together with the slide 19 along the guide 18; in this embodiment, the electric motor 24 is directly connected to the arm 13 to rotate the arm 13 around the rotation axis A. According to a different embodiment not illustrated, the electric motor 24 is integral to the body 4 and, therefore, it remains stationary together with the guide 18; in this embodiment, the electric motor 24 is connected to a transmission transmitting the movement to the arm 13 carried by the slide 19 (such as by means of a belt, a worm gear, or a chain).

When the motors 23 and 24 are mounted on the slide 19, flexible electric cables are provided which, on one side, are integral to the slide 19 to supply the electric motors 23 and 24 and, on the opposite side, are integral to the body 4; obviously, the cables are suitably deformable and form a loop, the extension of which is increased or decreased to follow the translation movement of the slide 19.

In summary, the actuator device 15 is configured to move the arm 13 on the windscreen 6 with a movement that entails the initial linear section T1 of pure translation along the guide 18 under the thrust of the electric motor 23, and the final circular section T2 of pure rotation around the rotation axis A under the thrust of the electric motor 24.

The embodiments described herein can be combined with one another.

The above-described windscreen wiper system 12 has several advantages.

Firstly, the above-described windscreen wiper system 12 has overall particularly small dimensions and weight, though ensuring effective cleaning of a particularly wide area of the windscreen 6.

In particular, the above described windscreen wiper system 12 minimizes the requirements necessary to provide the necessary rest position of the arm 13, since in the rest position the arm 13 remains completely visible on the windscreen 6, however at a side edge of the windscreen close to a front pillar 10. In this manner, in the rest position, the arm 13 "disappears from sight" forming one single assembly together with the front pillar 10 and, therefore, is perceived as substantially "invisible" even if, actually, it is completely visible. In this regard, it is important to highlight that the material making up the covering element 17 of the arm 13 is identical, in composition and colour, to the material making up the covering element 11 of the front pillar 10 and, therefore, when the two covering elements 11 and 17 are placed together seamlessly, in actual fact they become one single assembly to the human eye.

Thanks to the fact that, in the rest position, the arm 13 remains longitudinally arranged, it is possible to make the front hood 5 so that it seamlessly joins to the windscreen (as illustrated in Figure 7), since it is not necessary to obtain a compartment for housing the arm 13 under the front hood 5; in this manner, it is possible to improve the aerodynamic efficiency of this transition zone and it is also possible to make this transition zone nicer overall.

The movement of the arm 13 illustrated in Figures 2 and 8 is particularly advantageous, since it allows a wide area of the windscreen 6 (especially on the driver's left side) to be cleaned, minimizing the overall mass of the actuator device 15 by limiting the extension of the guide 18.

The fact of engaging the guide 18 directly with the lower edge of the windscreen 6 (by means of the coupling body 22) allows simplifying the assembly of the guide 18, since the guide 18 is directly related to the windscreen 6, on the outer surface of which the arm 13 must translate; furthermore, the fact of engaging the guide 18 directly with the lower edge of the windscreen 6 allows simplifying the design of other components of the body 4 in the proximity of the lower part of the windscreen 6, since all other components of the body 4 in the proximity of the lower part of the windscreen 6 are completely free from and independent of the structure and operation of the windscreen wiper system 12.

In summary, the above-described windscreen wiper system 12 has one single arm 13 which, in the rest position, is *"integrated"* in the front pillar 10 of the windscreen 6, being, in actual fact, concealed from view. Thanks to its innovative movement, the arm 13 ensures an almost complete cleaning of the surface of the windscreen 6. Furthermore, the arm 13 allows the aerodynamic drag to be significantly reduced both at rest (when the arm 13 is in the rest position) and during operation, since the arm 13 is almost never transverse to the air flow. The reduction in the aerodynamic drag generated by the arm 13 allows the maximum torque that can be generated by the electric motors 23 and 24 to be reduced, thereby allowing for a reduction in dimensions, weight, and consumption of the electric motors 23 and 24.

Thanks to the rest position of the arm 13 outside the volume occupied by the heads of the occupants of the passenger compartment, the windscreen wiper system 12 is not subject to the constraints set by the regulation which limits the damage caused by the impact of the head against the windscreen 6 in the event of a frontal impact.

The above-described windscreen wiper system 12 can be easily adapted to both driving positions, i.e. both in the left-hand and in the right-hand drive.

The above-described windscreen wiper system 12 is almost "universal" in that it can be simply and quickly adapted to different car (or other vehicle) models with minimal adjustments; in essence, from one car model to another car model it is only necessary to change the curvature of the slide 19 and the length of the blade 14.

Finally, in emergency operation (i.e. when the driver requires a quick blade stroke to restore visibility), the cleaning of the area of vision in front of the driver is very fast because, in the rest position, the arm 13 is located near the driver.

### LIST OF THE REFERENCE NUMERALS OF THE FIGURES

- 1: car
- 2: front wheels
- 3: rear wheels
- 4: body
- 5: front hood
- 6: windscreen
- 7: roof
- 8: doors
- 9: window
- 10: front pillar
- 11: covering element
- 12: windscreen wiper system
- 13: arm
- 14: blade
- 15: actuator device
- 16: structural element
- 17: covering element
- 18: guide
- 19: slide
- 20: frame
- 21: small wheels
- 22: coupling body
- 23: electric motor
- 24: electric motor
- T1: initial section
- T2: final section
- T: single section
- A: rotation axis

## Claims

1. A vehicle (1), comprising:
a body (4) provided with a windscreen (6) and with two front pillars (10), each laterally delimiting the windscreen (6); and
a windscreen wiper system (12) provided with one single arm (13), with a blade (14), which is coupled to the arm (13) and is pushed by the arm (13) against an outer surface of the windscreen (6), and with an actuator device (15) configured to move the arm (13) on the windscreen (6) with an alternating movement entailing at least one section (T1; T), in which the arm (13) makes a pure translation linear movement;
wherein the actuator device (15) comprises: a guide (18), which is directly and exclusively fixed to a lower edge of the windscreen (6) and defines the pure translation linear movement of the arm (13); a slide (19), which is mounted so as to slide on the guide (18) and supports the arm (13); and a first electric motor (23), which moves the slide (19) along the guide (18);
the vehicle (1) is **characterized in that** a coupling body (22) is coupled to the guide (18) and, on one side, it is integral to the guide (18) whereas, on the opposite side, it is shaped so as to enclose a lower end of the windscreen (6) .

2. The vehicle (1) according to claim 1, wherein the coupling body (22) encloses the lower edge of the windscreen (6) .

3. The vehicle (1) according to claim 1 or 2, wherein the coupling body (22) has a "U"-like shape so as to define a seat that accommodates therein a lower end of the windscreen (6).

4. The vehicle (1) according to claim 1, 2, or 3, wherein the guide (18) is directly and exclusively fixed to a lower edge of the windscreen (6) through the coupling body (22).

5. The vehicle (1) according to one of the claims from 1 to 4, wherein the guide (18) is only supported by the windscreen (6) through the coupling body (22) and has no points of contact with the other elements of the body (4).

6. The vehicle (1) according to one of claims from 1 to 5, wherein the actuator device (15) comprises a second electric motor (24), which is separate from and independent of the first electric motor (23) and is configured to rotate the arm (13) relative to the slide (19) around a rotation axis (A), which is perpendicular to the windscreen (6).

7. The vehicle (1) according to claim 6, wherein the actuator device (15) is configured to move the arm (13) on the windscreen (6) with a movement that entails an initial linear section (T1) of pure translation along the guide (18) under the thrust of the first electric motor (23) and a final circular section (T2) of pure rotation around the rotation axis (A) under the thrust of the second electric motor (24).

8. The vehicle (1) according to one of the claims from 1 to 7, wherein the actuator device (15) is configured to arrange the arm (13) in a rest position, in which the arm (13) remains stationary when the windscreen wiper system (12) is turned off and is arranged close to a front pillar (10).

9. The vehicle (1) according to claim 8, wherein the arm (13) comprises a structural element (16), on which the blade (14) is directly fixed, and a covering element (17), which is arranged on top of the structural element (16) on the side opposite the blade (14) and completely covers the structural element (16) so that the structural element (16) is completely hidden under the covering element (17).

10. The vehicle (1) according to claim 9, wherein the covering element (17) has a greater extension than the structural element (16) and, therefore, it completely covers the structural element (16).

11. The vehicle (1) according to claim 10, wherein, in the rest position, the covering element (17) rests against the front pillar (10) and is arranged in continuity with the front pillar (10).
